# EUROPÄISCHE PATENTSCHRIFT

(11) **EP 1 603 984 B1**
(45) Veröffentlichungstag und Bekanntmachung des Hinweises auf die Patenterteilung: **17.08.2011**
(21) Anmeldenummer: 04713878.9
(22) Anmeldetag: 24.02.2004
(51) Int. Cl.: C09J 4/06, C09J 133/06, C08F 265/00, C08F 299/02, C09J 7/02, C08K 5/00

(54) **HAFTKLEBSTOFF**
CONTACT ADHESIVE
ADHESIF SENSIBLE A LA PRESSION

(30) Priorität: 11.03.2003 DE 10310889
(43) Veröffentlichungstag der Anmeldung: 14.12.2005
(73) Patentinhaber: BASF SE, 67056 Ludwigshafen (DE)
(72) Erfinder: SCHUMACHER, Karl-Heinz, 67433 Neustadt (DE); CENTNER, Alexander, 67127 Rödersheim-Gronau (DE); DIEHL, Heiko, 67487 St. Martin (DE)
(86) Internationale Anmeldenummer: PCT/EP2004/001803
(87) Internationale Veröffentlichungsnummer: WO 2004/081133

(56) Entgegenhaltungen:
- EP-A- 0 628 616
- WO-A-93/09152

## Beschreibung

Die Erfindung betrifft die Verwendung gemäss Anspruch 1, eines unten näher beschriebenen Haftklebstoffs zur Herstellung von selbstklebenden Artikeln, bestehend aus einem Träger und einer ein- oder beidseitig aufgebrachten Schicht des Klebstoffs, enthaltend als Bindemittel ein Gemisch aus
- A): einem Polymer, welches erhältlich ist durch Polymerisation von radikalisch po- lymerisierbaren Verbindungen, und
- B): Verbindungen mit ethylenisch ungesättigten, radikalisch polymerisierbare Gruppen (kurz polymerisierbare Gruppe) und einem gewichtsmittleren Moleku- largewicht Mw kleiner 5000 g/mol.

Insbesondere betrifft die Erfindung die Verwendung des Haftklebstoffs zur Herstellung von selbstklebenden Etiketten, Folien und Bändern.

Als Haftklebstoff werden u.a. lösemittelfreie Polyacrylate oder wässrige Polyacrylatdispersionen verwendet.

Bei wässrigen Polymerdispersionen ist eine Trocknung zur Entfernung des Wassers erforderlich. Gewünscht sind daher lösemittelfreie Haftklebstoffe.

Strahlenvernetzbare Polymerisate und ihre Verwendung als Klebstoff, z.B. als Schmelzhaftklebstoff, sind z.B. aus EP-A-246 848 oder EP-A-377 199 bekannt. In der EP 0 628 616 A1 werden trägerlose Haftklebebänder beschrieben, welche aus einer Mischung von bestimmten, UV-vemetzbaren Polymerisaten mit mehrfunktionellen strahlenaktivierbaren Methacrylaten oder Acrylatoligomeren und einem Fotoinitiator nach flächiger Verteilung durch UV-Bestrahlung herstellbar sind. In der WO 93/09152 werden UV-vernetzte Hotmelt-Haftklebstoffe beschrieben, welche einen-copolymerisierten Photoinitiator Monomere mit niedriger Glasübergangstemperatur sowie multifunktionelle Monomere enthalten.

Bei strahlenvemetzbaren Haftklebstoffen wird die Kohäsion, d.h. die innere Festigkeit der Klebstoffschicht, nach Beschichten des Klebstoffs auf einen Träger durch anschließende photochemisch induzierte Vernetzung erreicht.

Bei Adhäsion (Haftung zum Substrat) und Kohäsion handelt es sich um entgegengesetzte anwendungstechnische Eigenschaften. Maßnahmen, die eine Verbesserung der

Adhäsion bewirken, führen im allgemeinen gleichzeitig zu einer Verschlechterung der Kohäsion und umgekehrt.

Gewünscht sind daher Maßnahmen, welche sowohl die Kohäsion als auch die Adhäsion verbessern, zumindest aber nicht eine der beiden Eigenschaften zu Lasten der anderen verbessern. Von Bedeutung ist auch eine hohe Wärmestandfestigkeit der Verklebung, d.h. auch bei höheren Temperaturen soll die Verklebung mechanischen Belastungen standhalten.

Insbesondere bei industriellen Anwendungen, vor allem bei Montageklebebändern, ist eine hohe Wärmestandfestigkeit oft entscheidend für den Einsatz eines Klebstoffs.

Demgemäß wurden die Verwendung der eingangs definierten Haftklebstoffe zur Herstellung von selbstklebenden Artikeln gefunden.

Der erfindungsgemäße verwendete Haftklebstoff enthält als wesentliche Bestandteile Polymere A) und Verbindungen B).

### Zu den Polymeren A):

Das Polymer A) ist vorzugsweise aufgebaut aus radikalisch polymerisierbaren Verbindungen (Monomere).

Vorzugsweise besteht das Polymer zu mindestens 40 Gew.-%, besonders bevorzugt zu mindestens 60 Gew.-%, ganz besonders bevorzugt zu mindestens 80 Ges.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atome, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen oder Mischungen dieser Monomeren.

Zu nennen sind z.B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat. Insbesondere sind auch Mischungen der (Meth)acrylsäurealkylester geeignet. Vinylester von Carbonsäuren mit 1 bis 20 C-Atomen sind z.B. Vinyllaurat, -stearat, Vinylpropionat, Versaticsäurevinylester und Vinylacetat.

Als vinylaromatische Verbindungen kommen Vinyltoluol a- und p-Methylstyrol, a-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Butadien, Isopren und Chloropren, Ethylen oder Propylen genannt.

Als Hauptmonomere bevorzugt sind die C₁- bis C₁₀-Alkylacrylate und -methacrylate, insbesondere C₁- bis C₈-Alkylacrylate und -methacrylate, wobei die Acrylate jeweils besonders bevorzugt sind.

Ganz besonders bevorzugt sind Methylacrylat, Ethylacrylat, n-Butylacrylat, n-Hexylacrylat, Octylacrylat und 2-Etyhlhexylacrylat sowie Mischungen dieser Monomere.

Neben den Hauptmonomeren kann das Polymer weitere Monomere enthalten, z.B. Monomere mit Carbonsäure, Sulfonsäure oder Phosphonsäuregruppen. Bevorzugt sind Carbonsäuregruppen. Genannt seien z.B. Acrylsäure, Methacrylsäure, Itaconsäure, Maleinsäure oder Fumarsäure.

Weitere Monomere sind z.B. auch Hydroxylgruppen enthaltende Monomere, insbesondere C₁-C₁₀-Hydroxyalkyl(meth)acrylate, (Meth)acrylamid und Ureidogruppen enthaltende Monomere wie Ureido(meth)acrylate.

Als weitere Monomere seien darüberhinaus Phenyloxyethylglykolmono- (meth-)acrylat, Glydidylacrylat, Glycidylmethacrylat, Amino- (meth-)acrylate wie 2-Aminoethyl- (meth)acrylat genannt.

Monomere, die außer der Doppelbindung noch weitere funktionelle Gruppen tragen, z.B. Isocyanat-, Amino-, Hydroxy-, Amid- oder Glycidyl-, können z.B. die Haftung auf Substraten verbessern. In Betracht kommen insbesondere auch cyclische Lactame wie N-Vinylpyrrolidon oder N-Vinylcaprolactam.

Das Polymer ist bevorzugt zu mindestens 40 Gew.%, besonders bevorzugt zu mindestens 60 Gew.-% und ganz besonders bevorzugt zu mindestens 80 Gew.-% aus C₁-C₂₀-Alkyl(meth)acrylaten, insbesondere den oben genannten Alkyl(meth)acrylaten aufgebaut.

Vorzugsweise handelt es sich um ein durch Bestrahlung mit energiereichem Licht z.B. UV-Licht oder Elektronenstrahlen vernetzbares Polymer.

Entsprechend vernetzbar ist das Polymer z.B. wenn Wasserstoffprotonen von der Polymerhauptkette photochemisch, insbesondere auch unter Verwendung eines Photoinitiators oder durch Elektronenstrahlen abgetrennt werden können, so dass ein Radikal entsteht, welches weitere chemische Reaktionen eingehen kann.

Der Haftklebstoff enthält ein Gemisch von Photoinitiatoren.

Beim Photoinitiator kann es sich z.B. um sogenannte α-Spalter handeln, das sind Photoinitiatoren, bei denen eine chemische Bindung gespalten wird, so dass 2 Radikale entstehen, die die weiteren Vemetzungs- oder Polymerisationsreaktionen initiieren.

Genannt seien z.B. Acylphosphinoxide (Lucirin® Marken der BASF), Hydroxyalkylphenone (z.B. Irgacure® 184), Benzoinderivate, Benzilderivate, Dialkyloxyacetophenone.

Insbesondere kann es sich um sogenannte H-Abstraktoren handeln, welche ein Wasserstoffatom von der Polymerkette ablösen, z. B. handelt es sich hierbei um Photoinitiatoren mit einer Carbonylgruppe. Diese Carbonylgruppe schiebt sich in eine C-H Bindung unter Ausbildung einer C-C-O-H Gruppierung.

Genannt seien hier insbesondere Acetophenon, Benzophenon und deren Derivate.

Es können beide Klassen von Photoinitiatoren allein oder auch im Gemisch verwendet werden.

Zumindest einer der Photoinitiatoren, ist an das Polymer A) gebunden.

Besonders bevorzugt handelt es sich um einen Fotoinitiator, welcher durch radikalische Copolymerisation in die Polymerkette eingebaut ist. Vorzugsweise enthält der Fotoinitiator dazu eine Acryl- oder (Meth)acrylgruppe.

Geeignete copolymerisierbare Fotoinitiatoren sind Acetophenon- oder Benzophenonderivate, welche mindestens eine, vorzugsweise eine, ethylenisch ungesättigte Gruppe enthalten. Bei der ethylenisch ungesättigten Gruppe handelt es sich vorzugsweise um eine Acryl- oder Methacrylgruppe.

Die ethylenisch ungesättigte Gruppe kann direkt an den Phenylring des Acetophenon- oder Benzophenonderivats gebunden sein. Im allgemeinen befindet sich zwischen Phenylring und ethylenisch ungesättigter Gruppe eine Spacergruppe (Abstandshalter).

Die Spacergruppe kann z.B. bis 100 C-Atome enthalten.

Geeignete Acetophenon- oder Benzophenonderivate sind z.B. in EP-A-346 734, EP-A-377199 (1. Anspruch), DE-A-4 037 079 (1. Anspruch) und DE-A-3 844 444 (1. Anspruch) beschrieben und sind durch diesen Verweis auch in der vorliegenden Anmeldung offenbart. Bevorzugte Acetophenon- und Benzophenonderivate sind solche der Formel 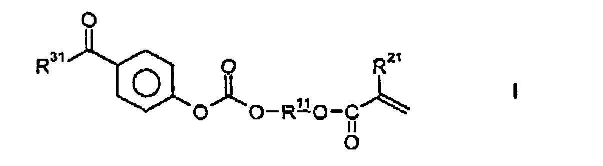 worin R¹¹ für einen organischen Rest mit bis zu 30 C-Atomen, R21 für ein H-Atom oder eine Methylgruppe und R³ für eine gegebenenfalls substituierte Phenylgruppe oder eine C₁-C₄-Alkylgruppe steht.

R¹¹ steht besonders bevorzugt für eine Alkylengruppe, insbesondere für eine C₂C₈-Alkylengruppe.

R³¹ steht besonders bevorzugt für eine Methylgruppe oder eine Phenylgruppe.

Der erfindungsgemäße Haftklebstoff enthält vorzugsweise 0,0001 bis 0,5 mol, besonders bevorzugt 0,0002 bis 0,1, ganz besonders bevorzugt 0,003 bis 0,01 mol des Fotoinitiators, bzw. der als Fotoinitiator wirksamen, an das Polymergebundenen Molekülgruppe, pro 100 g der Gewichtssumme von A) + B).

Das Polymer A) hat einen K-wert von 30, bis 90, insbesondere von 30 bis 80, besonders bevorzugt von 40 bis 60, gemessen in Tetrahydrofuran (1%ige Lösung, 21°C).

Der K-Wert nach Fikentscher ist ein Maß für das Molekulargewicht und Viskosität des Polymerisats. Das mit dem obigen K-Wert-Bereich verbundene Molgewicht ist weitaus höher als das Molgewicht der Verbindungen B). Das zahlenmittlere Molgewicht von A des Polymeren A) ist im allgemeinen mindestens doppelt, insbesondere mindestens 10 mal so hoch wie das der Verbindungen B).

Die Glasübergangstemperatur (Tg) des Polymeren beträgt vorzugsweise -60 bis +10°C, besonders bevorzugt -55 bis 0°C, ganz besonders bevorzugt -55 bis -10°C.

Die Glasübergangstemperatur des Polymeren läßt sich nach üblichen Methoden wie Differentialthermoanalyse oder Differential Scanning Calorimetrie (s. z.B. ASTM 3418/82, sog. "midpoint temperature" bestimmen.

Polymere A) können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, z.B. in Wasser oder flüssigen Kohlenwasserstoffen, oder in Lösung polymerisiert. Vorzugsweise werden die Polymeren durch Polymerisation der Monomeren in Lösungsmitteln (Lösungspolymerisation), insbesondere in Lösungsmitteln eines Siedebereichs von 50 bis 1500°C, vorzugsweise von 60 bis 120°C unter Verwendung der üblichen Mengen an Polymerisationsinitiatoren, die im allgemeinen bei 0,01 bis 10, insbesondere bei 0,1 bis 4 Gew.%, bezogen auf das Gesamtgewicht der Monomeren liegt, hergestellt. Als Lösungsmittel kommen insbesondere Alkohole, wie Methanol, Ethanol, n- und iso-Propanol, n- und iso-Butanol, vorzugsweise Isopropanol und/oder Isobutanol sowie Kohlenwasserstoffe wie Toluol und insbesondere Benzine eines Siedebereichs von 60 bis 120°C in Frage. Ferner können Ketone, wie Aceton, Methylethylketon, Methylisobutylketon und Ester, bei Essigsäureethylester sowie Gemische von Lösungsmitteln der genannten Art eingesetzt werden, wobei Gemische, die Isopropanol und/oder Isobutanol in Mengen von 5 bis 95, insbesondere von 10 bis 80, vorzugsweise von 25 bis 60 Gew.-%, bezogen auf das eingesetzte Lösungsgemisch, enthalten, vorgezogen werden.

Als Polymerisationsinitiatoren kommen bei der Lösungspolymerisation beispielsweise Azoverbindungen, Ketonperoxide und Alkylperoxide in Betracht.

Nach der Polymerisation in Lösung können die Lösungsmittel gegebenenfalls unter vermindertem Druck abgetrennt werden, wobei man bei erhöhten Temperaturen, beispielsweise im Bereich von 100 bis 150°C arbeitet. Die Polymeren können dann in lösungsmittelfreiem Zustand, d.h. als Schmelzen, eingesetzt werden. In manchen Fällen ist es auch von Vorteil, die Polymeren durch Polymerisation in Substanz, d.h. ohne Mitverwendung eines Lösungsmittels, herzustellen, wobei man chargenweise oder auch kontinuierlich, z.B. nach den Angaben der US-PS 4 042 768, arbeiten kann.

### Zu den Verbindungen B)

Als Verbindungen B) kommen übliche radikalisch polymerisierbare Monomere mit definierter chemischer Strukturformel und einem tatsächlichen Molgewicht unter 200 g/mol in Betracht (im Nachfolgenden als Verbindungen B1 bezeichnet).

Verbindungen B1 haben eine polymerisierbare Gruppe.

Als Verbindungen B1 sind insbesondere die oben aufgeführten Monomere zu nennen, aus denen das Polymer A) aufgebaut sein kann. Insbesondere zu nennen sind Acrylmonomere mit einer Acryl- oder Methacrylgruppe.

Sonstige Verbindungen B, die nicht unter B1 fallen werden im Nachfolgenden B2 genannt.

Insbesondere handelt es sich bei Verbindungen B2 um (Meth)acrylatverbindungen, bevorzugt sind jeweils die Acrylatverbindungen, d.h. die Derivate der Acrylsäure.

Bevorzugte (Meth)acrylat-Verbindungen B2 enthalten 2 bis 20, bevorzugt 2 bis 10 und ganz besonders bevorzugt 2 bis 5 copolymerisierbare, ethylenisch ungesättigte Doppelbindungen.

Das gewichtsmittlere Molekulargewicht M_{w} der Verbindungen B2 liegt bevorzugt unter 5000, besonders bevorzugt unter 3000 g/mol (bestimmt durch Gelpermeationschromatographie mit Polystyrol als Standard und Tetrahydrofuran als Elutionsmittel). Ganz besonders bevorzugt liegt es unter 2000 und insbesondere unter 1000 g/mol. Das M_{w} von B2 ist besonders bevorzugt größer 250 und ganz besonders bevorzugt größer 400 g/mol.

Als (Meth)acrylatverbindungen genannt seien (Meth)acrylsäureester und insbesondere Acrylsäureester von mehrfunktionellen Alkoholen, insbesondere solchen, die neben den Hydroxylgruppen keine weiteren funktionellen Gruppen oder allenfalls Ethergruppen enthalten. Beispiele solcher Alkohole sind z.B. bifunktionelle Alkohole, wie Ethylenglykol, Propylenglykol, und deren höher kondensierte Vertreter, z.B. wie Diethylenglykol, Triethylenglykol, Dipropylenglykol, Tripropylenglykol etc., Butandiol, Pentandiol, Hexandiol, Neopentylglykol, alkoxylierte phenolische Verbindungen, wie ethoxylierte bzw. propoxylierte Bisphenole, Cyclohexandimethanol, trifunktionelle und höher- funktionelle Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierte Alkohole.

Die Alkoxylierungsprodukte sind in bekannter Weise durch Umsetzung der vorstehenden Alkohole mit Alkylenoxiden, insbesondere Ethylen- oder Propylenoxid, erhältlich. Vorzugsweise beträgt der Alkoxylierungsgrad je Hydroxylgruppe 0 bis 10, d.h. 1 mol Hydroxylgruppe kann vorzugsweise mit bis zu 10 mol Alkylenoxiden alkoxyliert sein.

Als (Meth)acrylatverbindungen seien weiterhin Polyester(meth)acrylate genannt, wobei es sich um die (Meth)Acrylsäureester von Polyesterolen handelt.

Als Polyesterole kommen z.B. solche in Betracht, wie sie durch Veresterung von Polycarbonsäuren, vorzugsweise Dicarbonsäuren, mit Polyolen, vorzugsweise Diolen, hergestellt werden können. Die Ausgangsstoffe für solche hydroxylgruppenhaltige Polyester sind dem Fachmann bekannt. Bevorzugt können als Dicarbonsäuren Bernsteinsäure, Glutarsäure, Adipinsäure, Sebacinsäure, o-Phthalsäure, deren Isomere und Hydrierungsprodukte sowie veresterbare Derivate, wie Anhydride oder Dialkylester der genannten Säuren eingesetzt werden. Als Polyole kommen die oben genannten Alkohole, vorzugsweise Ethylenglykol, Propylenglykol-1,2 und -1,3, Butandiol-1,4, Hexandiol-1,6, Neopentylglykol, Cyclohexandimethanol sowie Polyglykole vom Typ des Ethylenglykols und Propylenglykols in Betracht.

Polyester(meth)acrylate können in mehreren Stufen oder auch einstufig, wie z.B. in EP 279 303 beschrieben, aus Acrylsäure, Polycarbonsäure, Polyol hergestellt werden.

Weiterhin kann es sich bei Verbindungen B) z.B. um Epoxid- oder Urethan(meth)-acrylate handeln.

Epoxid(meth)acrylate sind z.B. solche wie sie durch Umsetzung von epoxidierten Olefinen oder Poly- bzw. Mono- oder Diglycidylethern, wie Bisphenol-A-diglycidylether, mit (Meth)acrylsäure erhältlich sind.

Die Umsetzung ist dem Fachmann bekannt und z.B. in R. Holmann, U.V. and E.B. Curing Formulation for Printing Inks and Paints, London 1984, beschrieben.

Bei Urethan(meth)acrylaten handelt es sich insbesondere um Umsetzungsprodukte von Hydroxyalkyl(meth)acrylaten mit Poly- bzw. Diisocyanaten (s. ebenfalls R. Holmann, U.V. and E.B. Curing Formulation for Printing Inks and Paints, London 1984). Als Verbindungen B sind insbesondere Verbindungen B2 und Mischungen von B2 und B1 geeignet.

Vorzugsweise bestehen Verbindungen B) insgesamt zu mindestens 50 Gew.-% besonders bevorzugt zu mindestens 75 Gew.% aus Verbindungen B2). Bevorzugte Verbindungen B2 sind die oben aufgeführten (Meth)acrylsäureester.

Insgesamt gilt für Verbindungen B), unabhängig davon ob es sich um B1, B2 oder Mischungen von B1 und B2 handelt, dass sie bei 21°C, 1 bar flüssig sind.

Die Viskosität der Verbindungen B, bzw. des Gemisches der Verbindungen B beträgt vorzugsweise 0,01 bis 50 mPas, besonders bevorzugt 0,04 bis 10 mPas bei 23°C, 1 bar, gemessen nach DIN EN ISO 3219; ganz besonders bevorzugt beträgt die Viskosität 0,04 bis 2 und insbesondere 0,04 bis 1 mPas.

Im Mittel haben Verbindungen B, bzw. das Gemisch der Verbindungen B 1 bis 5, vorzugsweise 1 bis 3, besonders bevorzugt 1,5 bis 2,5 polymerisierbare Gruppen pro Molekül.

### Zur Mischung von A) und B)

Der Haftklebstoff enthält als Bindemittel ein Gemisch von A) und B), wobei der Gewichtsanteil von A) vorzugsweise maximal 99 Gew.-%, besonders bevorzugt maximal 95 Gew.-% und vorzugsweise mindestens 30 Gew.-%, besonders bevorzugt mindestens 50 bzw. mindestens 60 Gew.-% beträgt.

Entsprechend beträgt der Gewichtsanteil von B) vorzugsweise maximal 70 Gew.-%, besonders bevorzugt maximal 50 Gew.-% bzw. maximal 40 Gew.-% und vorzugsweise mindestens 1 Gew.-%, besonders bevorzugt mindestens 5 Gew.-%.

Geeigente Gewichtsbereiche von A) und B) sind insbesondere:

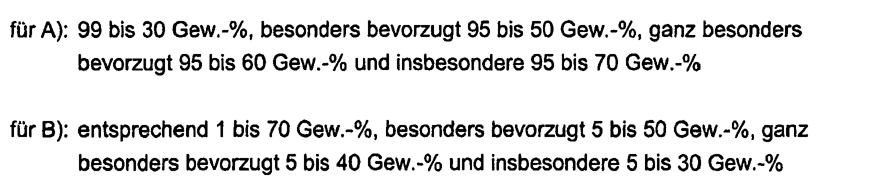

Sämtliche Gewichtsangaben für A) und B) sind dabei auf die Gewichtssumme von A) und B) bezogen.

Die Mischung von A) und B) kann nach üblichen Verfahren hergestellt werden.

Vorzugsweise wird Polymer A) erhitzt, z.B. auf Temperaturen zwischen 50 und 130°C, und Verbindungen A) werden, gegebenenfalls zusammen mit weiteren Zusatzstoffen, eingerührt.

### Zu den Haftklebstoffen

Die Haftklebstoffe können allein aus dem Gemisch von A) und B) bestehen.

Wasser oder sonstige Lösemittel, z.B. aus der Lösungspolymerisation von A) sind vorzugsweise allenfalls in geringen Mengen vorhanden.

Vorzugsweise enthält der Haftklebstoff weniger als 5 Gew.-Teile, insbesondere weniger als 2 bzw. 1 Gew.-Teil Wasser und/oder Lösemittel auf 100 Gew.-Teile der Gewichtssumme von A) und B). Besonders bevorzugt ist der Haftklebstoff im wesentlichen frei von Wasser und sonstigen Lösemitteln.

Der Haftklebstoff enthält ein Gemisch von Photoinitiatoren (s. oben). Soweit es sich dabei nicht um einen an das Polymer gebundenen Photoinitiator handelt, ist der Photoinitiator dem Gemisch von A) und B) oder bereits den Komponenten A) oder B) zugesetzt.

Weitere Additive, welche dem Haftklebstoff zugesetzt werden können, sind z.B. Füllstoffe, Farbstoffe, Verlaufshilfsmittel und insbesondere Tackifier (klebrigmachende Harze).

Tackifier sind z.B. Naturharze, wie Kolophoniumharze und deren durch Disproportionierung oder Isomerisierung, Polymerisation, Dimerisation, Hydrierung entstehenden Derivate. Diese können in ihrer Salzform (mit z. B. ein- oder mehrwertigen Gegenionen (Kationen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propanthiol, Pentaerythrit.

Des weiteren finden auch Kohlenwasserstoffharze, z.B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, a-Methylstyrol, Vinyltoluol Verwendung.

Als Tackifier werden zunehmend auch Polyacrylate, welche ein geringes Molgewicht aufweisen, verwendet. Vorzugsweise haben diese Polyacrylate ein gewichtsmittleres Molekulargewicht Mw unter 30 000. Die Polyacrylate bestehen bevorzugt zu mindestens 60, insbesondere mindestens 80 Gew.-% aus C1-C8 Alkyl(meth)acrylaten.

Bevorzugte Tackifier sind natürliche oder chemisch modifizierte Kolophoniumharze. Kolophoniumharze bestehen zum überwiegenden Teil aus Abietinsäure oder Abietinsäurederivaten.

Die Gewichtsmenge der Tackifier beträgt z.B. 5 bis 100 Gew.-Teile. besonders bevorzugt 10 bis 50 Gew.-Teile. bezogen auf 100 Gew.-Teile der Gewichtssumme von A) + B).

Die Haftklebstoffe werden vorzugsweise als Schmelzhaftklebstoffe verwendet, d.h. sie werden aus der Schmelze auf die gewünschten Träger aufgetragen.

Insbesondere eigenen sich die erfindungsgemäßen Haftklebstoffe bzw. Schmelzklebstoffe zur Herstellung von selbstklebenden Artikeln, wie Etiketten, Klebebändern oder Klebefolien, z.B. Schutzfolien.

Die selbstklebenden Artikel bestehen aus einem Träger und einer ein*- oder beidseitig, vorzugsweise einseitig aufgebrachten Schicht des Klebstoffs.

Bei dem Trägermaterial kann es sich z.B. im Papier, Kunststofffolien aus Polyolefinen oder PVC handeln.

Die selbstklebenden Artikel werden insbesondere dadurch hergestellt, dass der Haftklebstoff auf den Träger aufgebracht wird und anschließend eine Vernetzung mit UV-Licht oder Elektronenstrahlen erfolgt.

Die Strahlungsenergie kann z.B. 10 mJ/cm2 bis 1500 mJ/cm2 bestrahlte Fläche betragen.

Als selbstklebende Artikel sind Etiketten oder Montageklebebänder bevorzugt.

Bevorzugt sind außerdem Schutzfolien. Die Schutzfolie soll Gegenstände bei Transport oder Lagerung schützen. Die Schutzfolien können vom Gegenstand rückstandsfrei von Hand wieder abgezogen werden.

Die selbstklebenden Artikel eignen sich für unterschiedlichste Substrate. Die Substrate können z.B. aus Metallen, Papier, Karton, Holz, Kunststoffen etc. sein.

Generell wird eine sehr gute Adhäsion und Kohäsion erreicht.

Insbesondere ist auch die Wärmefestigkeit verbessert, d.h. die Verklebungen halten auch bei hohen Temperaturen. Die erfindungsgemäßen Gemische bzw. Haftklebstoffe eignen sich besonders auch für Montageklebebänder, welche bei der industriellen Produktion, z.B. von Kraftfahrzeugen, Verwendungen finden.

### Beispiele

### verwendete Materialien

acResin® A 258 UV: strahlungshärtbares Copolymer von Acrylmonomeren und einem copolymerisierten Benzophenonderivat (siehe Formel I) Laromer® LR 8863: ethoxyliertes Trimethylolpropantriacrylat (0,07 - 0,13 mPas) Irgacure® 184: Hydroxycyclohexylphenylketon, Fotoinitiator Darocure® 1173: Fotoinitiator

### Herstellung der Haftklebstoffe

Soweit ein separater Photoinitiator verwendet wurde, wurde dieser bei 70°C in Verbindung B (Laromer) gelöst.

Polymer A (acResin) wurde auf 100°C erhitzt und die auf 70°C erwärmte Verbindung B bzw. die vorstehende Lösung eingerührt.

Der Haftklebstoff (Temperatur des Klebstoffs 95°C) wird mittels eines Balkenrakels direkt auf die entsprechende Folie (siehe Tabellen zu Beispielen 1 bis 3) beschichtet (Kleberauftragsmenge 5 - 6 g trocken/m²).

Danach wurde die Folie mit UV-Licht bestrahlt. Die Bestrahlungsdosis ist in den Tabellen angegeben.

Der mit Haftklebstoff beschichtete Träger wurde in 25 mm breite Prüfstreifen geschnitten. Zur Bestimmung der Scherfestigkeit wurden die Prüfstreifen mit einer verklebten Fläche von 25 mm² auf die Prüffläche (siehe Beispiele) geklebt, mit einer 1 kg schweren Rolle 1 mal angerollt, 10 min gelagert (im Normklima, 50 % rel. Luftfeuchtigkeit 1 bar, 23°C) und anschließend hängend mit einem 1 kg Gewicht belastet (im Normklima). Das Maß für die Scherfestigkeit war die Zeit bis zum Abfallen des Gewichts; es wurde jeweils der Durchschnitt aus 5 Messungen berechnet.

Bei der Bestimmung der Schälfestigkeit (Adhäsion) wurde jeweils ein 2,5 cm breiter Prüfstreifen auf die Prüffläche (siehe Beispiele) geklebt und mit einer 1 kg schweren Rolle 1 mal angerollt. Er wurde dann mit einem Ende in die oberen Backen einer Zug-Dehnungs-Prüfapparatur eingespannt. Der Klebestreifen wurde mit 300 mm/min unter einem 180° Winkel von der Prüffläche abgezogen d.h. der Klebestreifen wurde umgebogen und parallel zum Prüfblech abgezogen und der dazu benötigte Kraftaufwand gemessen. Das Maß für die Schälfestigkeit war die Kraft in N/2,5 cm, die sich als Durchschnittswert aus fünf Messungen ergab.

Die Schälfestigkeit wurde 24 Stunden nach der Verklebung bestimmt. Nach dieser Zeit hat sich die Klebekraft voll ausgebildet.

Für den SAFT Test (Shear Adhesion Failure Temperature, Wärmefestigkeit) wurden die Proben wie für den Schertest vorbereitet und mit 1 kg belastet. Die Proben wurden dann in einem klimatisierten Trockenschrank aufgehängt und die Temperatur wurde mit 0,5oC/min erhöht. Als Maß für die Wärmefestigkeit gilt die Temperatur, bei der das Gewicht abfällt.

**Beispiel 1: Mischung aus acResin A 258 UV, Laromer LR 8863 und Irgacure 184; 100:5:5 (Gewichtsteile)**

| 60 g/m² auf Träger Hostaphan RN 36 (Polyes- terfolie) Anwendung Mon- tagebänder | Schälfestigkeit auf Stahl nach 24 h Kontaktzeit | Schälfestigkeit auf PE nach 24 h Kon- taktzeit | Shear Adhesion Failure Tempera- ture (1kg 25x25 mm) auf Stahl |
|---|---|---|---|
| Beispiel 1 Vernetzung mit 30 mJ/cm² | 19,6 N/25 mm | 11,4 N/25 mm | 144°C |
| Vergleichsbeispiel 1 acResin A 258 UV Vernet- zung mit 30 mJ/cm² | 14,9 N/25 mm | 8,5 N/25 mm | 121°C |

**Beispiel 2: Mischung aus acResin A 258 UV, Laromer LR 8863 und Irgacure 184; 100:5:1 (Gewichtsteile)**

| 20 g/m² auf Träger OPP orien- tiertes (Polypropylen) Anwen- dung Folienetiketten | Schälfestigkeit auf Glas nach 24 h Kontaktzeit | Scherfestigkeit auf Stahl 1 kg/ 25x25 mm bei 23°C |
|---|---|---|
| Beispiel 2 Vernetzung mit 20 mJ/cm² | 9,0 N/25 mm | > 100 h |
| Vergleichsbeispiel 2 acResin A 258 UV Vernetzung mit 20 mJ/cm² | 8,3 | 49 h |

**Beispiel 3: Mischung aus acResin A 258 UV, Laromer LR 8863 und Darocure 1173; 100:40:5 (Gewichtsteile)**

| 5 g/m² auf Träger PE (Polyethy- len) Lagerung der Verklebun- gen 1 wo/50°C und 80% rel. Luftf. (Anwendung Schutzfolien) | Schälwerte auf AFERAStahl und Rückstände nach Wiederabziehen der Schutzfolie | Schälwerte auf Polycarbonat und Rückstände nach Wie- derabziehen der Schutzfolie |
|---|---|---|
| Beispiel 3 Vernetzung mit 40 mJ/cm² | 1,9 kaum Rückstände | 1,7 kaum Rückstände |
| Vergleichsbeispiel 3 acResin A 203 UV Vernetzung mit 40 mJ/cm² | 9,3 Sichtbare Rückstände | 8,6 Sichtbare Rückstände |

## Patentansprüche

1. Verwendung eines Haftklebstoffs zur Herstellung von selbstklebenden Artikeln, bestehend aus einem Träger und einer ein- oder beidseitig aufgebrachten Schicht des Klebstoffs, enthaltend als Bindemittel ein Gemisch aus
A) einem Polymer, welches erhältlich ist durch Polymerisation von radikalisch polymerisierbaren Verbindungen, und
B) Verbindungen mit ethylenisch ungesättigten, radikalisch polymerisierbare Gruppen (kurz polymerisierbare Gruppe) und einem gewichtsmittteren Mo- lekulargewicht Mw kleiner 5000 g/mol,
wobei der Klebstoff ein Gemisch von Fotoinitiatoren enthält, wobei mindestens einer der Fotoinitiatoren an das Polymer A) gebunden ist und der nicht an das Polymer A) gebundener Fotoinitiator dem Gemisch von A) und B) oder den Komponenten A) oder B) zugesetzt ist und wobei das Polymer A) einen K-Wert von 30 bis 90 hat, gemessen als 1gew%ige Lösung in Tetrahydrofuran bei 21°C.

2. Verwendung gemäß Anspruch 1, **dadurch gekennzeichnet, dass** das Polymer zu mindestens 40 Gew % aus (Meth)acrylaten aufgebaut ist.

3. Verwendung gemäß einem der Ansprüche 1 bis 2, **dadurch gekennzeichnet,**
**dass** das Polymer ein mittleres Molgewicht hat, welches mindestens doppelt so hoch ist wie das Molgewicht von B).

4. Verwendung gemäß einem der Ansprüche 1 bis 3, **dadurch gekennzeichnet,**
**dass** das Polymer einen K-Wert von 30 bis 80 (Tetrahydrofuran, 1 gew%ige Lösung, 21°C) hat.

5. Verwendung gemäß einem der Ansprüche 1 bis 4, **dadurch gekennzeichnet,**
**dass** es sich bei dem Polymer um ein Lösungspolymerisat handelt.

6. Verwendung gemäß einem der Ansprüche 1 bis 5, **dadurch gekennzeichnet,**
**dass** die Verbindungen B) bei 21°C, 1 bar flüssig sind und eine Viskosität von 0,05 bis 50 Pas haben.

7. Verwendung gemäß einem der Ansprüche 1 bis 6, **dadurch gekennzeichnet,**
**dass** die Verbindungen B) im Mittel 1 bis 5 polymerisierbare Gruppen pro Molekül enthalten.

8. Verwendung gemäß einem der Ansprüche 1 bis 7, **dadurch gekennzeichnet, dass** es sich bei den polymerisierbaren Gruppen der Verbindungen B um Acryl- oder Methacrylgruppen handelt.

9. Verwendung gemäß einem der Ansprüche 1 bis 8, **dadurch gekennzeichnet, dass** es sich bei den Verbindungen B) um (Meth)acrylsäureester von mehrwertigen, gegebenenfalls alkoxylierten Alkoholen handelt.

10. Verwendung gemäß einem der Ansprüche 1 bis 9, **dadurch gekennzeichnet, dass** der Gewichtsanteil der Verbindungen B) 5 bis 70 Gew. %, bezogen auf die Gewichtssumme von A) +B), beträgt.

11. Verwendung gemäß einem der Ansprüche 1 bis 10, **dadurch gekennzeichnet, dass** der Haftklebstoff 0,0001 bis 0,5 mol eine Fotoinitiators oder einer Fotoinitiatorgruppe pro 100g der Gewichtsumme von Polymer A) und Verbindungen B) enthält.

12. Verwendung gemäß einem der Ansprüche 1 bis 11, **dadurch gekennzeichnet, dass** der Haftklebstoff weniger als 5 Gew.-Teile Wasser oder Lösemittel, bezogen auf 100 Gew.-Teile der Gewichtssumme aus A) und B) enthält.

13. Verwendung gemäß einem der Ansprüche 1 bis 11zur Herstellung von selbstklebenden Etiketten, Folien oder Bändern.

14. Selbstklebende Etiketten, Folien oder Bänder erhältlich unter Verwendung gemäß Anspruch 13.

## Claims

1. The use of a pressure-sensitive adhesive for producing self-adhesive articles, composed of a backing and a layer of the adhesive applied to one or both sides, comprising as binder a mixture of
A) a polymer obtainable by polymerizing free- radically polymerizable compounds, and
B) compounds having ethylenically unsaturated, free-radically polymerizable groups (polymerizable group for short) and a weight- average molecular weight Mw of less than 5 000 g/mol,
the adhesive comprising a mixture of photoinitiators, at least one of the photoinitiators being attached to the polymer A), and the photoinitiator not attached to the polymer A) being added to the mixture of A) and B) or to the components A) or B), and the polymer A) having a K value of 30 to 80, measured as a 1% strength by weight solution in tetrahydrofuran at 21°C.

2. The use according to claim 1, wherein the polymer is synthesized from at least 40% by weight of (meth)acrylates.

3. The use according to any one of claims 1 to 2, wherein the polymer has an average molar weight which is at least twice as high as the molar weight of B).

4. The use according to any one of claims 1 to 3, wherein the polymer has a K value of 30 to 80 (tetrahydrofuran, 1% strength by weight solution, 21°C).

5. The use according to any one of claims 1 to 4, wherein the polymer is a solution polymer.

6. The use according to any one of claims 1 to 5, wherein the compounds B) are liquid at 21°C and 1 bar and have a viscosity of 0.05 to 50 Pas.

7. The use according to any one of claims 1 to 6, wherein the compounds B) comprise on average 1 to 5 polymerizable groups per molecule.

8. The use according to any one of claims 1 to 7, wherein the polymerizable groups of the compounds B are acrylic or methacrylic groups.

9. The use according to any one of claims 1 to 8, wherein the compounds B) are (meth)acrylic esters of polyhydric alcohols which are optionally alkoxylated alcohols.

10. The use according to any one of claims 1 to 9, wherein the weight fraction of the compounds B) is 5% to 70% by weight, based on the sum by weight of A) + B).

11. The use according to any one of claims 1 to 10, wherein the pressure-sensitive adhesive comprises 0.0001 to 0.5 mol of a photoinitiator or of a photoinitiator group per 100 g of the sum by weight of polymer A) and compounds B).

12. The use according to any one of claims 1 to 11, wherein the pressure-sensitive adhesive comprises less than 5 parts by weight of water or solvent, based on 100 parts by weight of the sum by weight of A) and B).

13. The use according to any one of claims 1 to 11 for producing self-adhesive labels, sheets or tapes.

14. Self-adhesive labels, sheets or tapes obtainable with use according to claim 13.

## Revendications

1. Utilisation d'un autoadhésif pour la fabrication d'articles autoadhésifs constitués d'un support et d'une couche de l'adhésif appliquée sur une face ou sur les deux, contenant en tant que liant un mélange
A) d'un polymère, qui peut être obtenu par polymérisation de composés polymérisables par voie radicalaire, et
B) de composés comportant des groupes à insaturation éthyléniques, polymérisables par voie radicalaire (brièvement groupe polymérisable) et ayant une masse moléculaire moyenne en poids Mw inférieure à 5 000 g/mole,
l'adhésif contenant un mélange de photoamorceurs, au moins l'un des photoamorceurs étant lié au polymère A) et le photoamorceur non lié au polymère A) étant ajouté au mélange de A) et B) ou au composant A) ou B) et le polymère A) ayant un indice K de 30 à 90, mesuré sous forme de solution à 1 % en poids dans du tétrahydrofuranne, à 21°C.

2. Utilisation selon la revendication 1, **caractérisée en ce que** le polymère est constitué à raison d'au moins 40 % en poids de (méth)acrylates.

3. Utilisation selon l'une quelconque des revendications 1 et 2, **caractérisée en ce que** le polymère a une masse moléculaire qui est au moins le double de la masse moléculaire de B).

4. Utilisation selon l'une quelconque des revendications 1 à 3, **caractérisée en ce que** le polymère a un indice K de 30 à 80 (tétrahydrofuranne, solution à 1 % en poids, 21 °C).

5. Utilisation selon l'une quelconque des revendications 1 à 4, **caractérisée en ce que** le polymère consiste en un produit de polymérisation en solution.

6. Utilisation selon l'une quelconque des revendications 1 à 5, **caractérisée en ce que** les composés B) sont liquides à 21 °C, sous 1 bar, et ont une viscosité de 0,05 à 50 Pa.s.

7. Utilisation selon l'une quelconque des revendications 1 à 6, **caractérisée en ce que** les composés B) contiennent en moyenne de 1 à 5 groupes polymérisables par molécule.

8. Utilisation selon l'une quelconque des revendications 1 à 7, **caractérisée en ce que** les groupes polymérisables des composés B consistent en des groupes acryloyle ou méthacryloyle.

9. Utilisation selon l'une quelconque des revendications 1 à 8, **caractérisée en ce que** les composés B) consistent en des esters (méth)acryliques d'alcools polyhydriques, éventuellement alcoxylés.

10. Utilisation selon l'une quelconque des revendications 1 à 9, **caractérisée en ce que** la proportion en poids des composés B) vaut de 5 à 70 % en poids, par rapport à la somme des poids de A) + B).

11. Utilisation selon l'une quelconque des revendications 1 à 10, **caractérisée en ce que** l'autoadhésif contient de 0,0001 à 0,5 mole d'un photoamorceur ou d'un groupe photoamorceur pour 100 g de la somme des poids du polymère A) et des composés B).

12. Utilisation selon l'une quelconque des revendications 1 à 11, **caractérisée en ce que** l'autoadhésif contient moins de 5 parties en poids d'eau ou de solvant, par rapport à 100 parties en poids de la somme des poids de A) et B).

13. Utilisation selon l'une quelconque des revendications 1 à 11, pour la fabrication d'étiquettes autoadhésives, de films ou rubans autoadhésifs.

14. Étiquettes autoadhésives, films ou rubans autoadhésifs, pouvant être obtenus avec utilisation selon la revendication 13.
